# EUROPEAN PATENT APPLICATION

(11) **EP 1 965 245 A1**
(43) Date of publication of application: **03.09.2008**
(21) Application number: 08100288.3
(22) Date of filing: 09.01.2008
(51) Int. Cl.: G02B 27/22, G02B 27/26, H04N 13/00

(54) **Stereoscopic Display Apparatus**

(30) Priority: 27.02.2007 KR 20070019897
(71) Applicant: Samsung Electronics Co., Ltd., Suwon-si, Gyeonggi-do 442-742 (KR)
(72) Inventor: KIM, Dae-sik, Yeongtong-gu, Suwon-si, Gyeonggi-do (KR); CHESTAK, Sergey, Yeongtong-dong, Yeongtong-gu, Suwon-si. Gyeonggi-do (KR); CHA, Kyung-hoon, Yongin-si, Gyeonggi-do (KR)
(74) Representative: Hewett, Jonathan Michael Richard

(57) **Abstract**

Provided is a highly efficient two-dimensional (2D)/three-dimensional (3D) image switchable stereoscopic display (30). The stereoscopic display apparatus (30) includes: a backlight unit (31) which has a reflective plate (37) disposed on a bottom surface thereof; a polarizer (32) which only transmits light of a specific polarization direction emitted from the backlight unit (31); a first birefringent element array (33) including a plurality of alternating first and second birefringent elements (33a,33b) that change the polarization direction of incident light; a second birefringent element array (34) including a plurality of alternating third and fourth birefringent elements (34a,34b) that change the polarization direction of incident light; a reflective polarizing sheet (35) which transmits light of a specific polarization direction transmitted by the second birefringent element array (34) while reflecting light of another polarization direction transmitted by the second birefringent element array (34); and a display panel (36) which displays an image.

## Description

The present invention relates to a stereoscopic display apparatus, and more particularly to a two-dimensional (2D) / three-dimensional (3D) image switchable stereoscopic display apparatus which provides increased brightness by improving its light use efficiency.

Three-dimensional (3D) images are produced based on a principle of stereoscopic vision as seen by human eyes. A binocular parallax, which is caused by the separation of a pair of eyes by approximately 65 mm, is the most important factor to depth perception. Recently, there has been an increasing need for stereoscopic image displays that provide stereoscopic images based on binocular parallax in various fields such as medical imaging, computer games, advertising, education, and military applications. Furthermore, due to the increasing popularity of high-resolution TVs, stereoscopic TVs that are capable of providing a viewer with a 3D experience will become popular. To meet such needs, various 3D image reconstruction techniques have been proposed.

Three dimensional displays that display 3D stereoscopic images can be classified as glasses type displays, autostereoscopy type displays, and holography type displays. Glasses type and autostereoscopy type displays provide a 3D view by separately displaying 2D images with a parallax of the left and right eyes. The glasses type displays require a user to wear glasses such as polarization glasses to enable the viewing of 3D images. Holography type displays are ideal for displaying perfect stereoscopic images, however, require coherent light sources such as lasers. Furthermore, it is difficult to record and reproduce large, distant objects with holographic displays. Thus, autostereoscopic 3D displays are actively being developed.

Autostereoscopic image displays are roughly classified as parallax barrier type autostereoscopic displays and lenticular type autosterescopic displays. The parallax barrier type autostereoscopic displays display a left eye image and a right eye image on alternating vertical columns of pixels that are viewed through a thin vertical lattice, that is, a barrier.

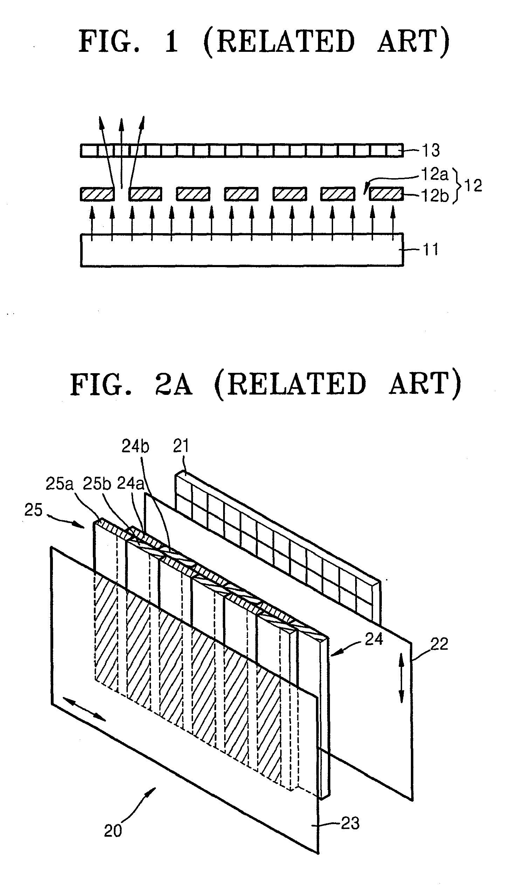

Figure 1 illustrates an exemplary configuration of a related art parallax barrier type autostereoscopic display. Referring to Figure 1, the related art parallax barrier type autostereoscopic display includes a backlight unit 11, a liquid crystal panel 13, and a parallax barrier 12 having apertures 12a and barriers 12b arranged with a predetermined period. Although Figure 1 shows that the parallax barrier 12 is located between the liquid crystal panel 13 and the backlight unit 11, the parallax barrier 12 may be disposed in front of the liquid crystal panel 13. In the above configuration, a left eye image and a right eye image that are alternately displayed on the liquid crystal panel 13 may be separated by the apertures 12a.

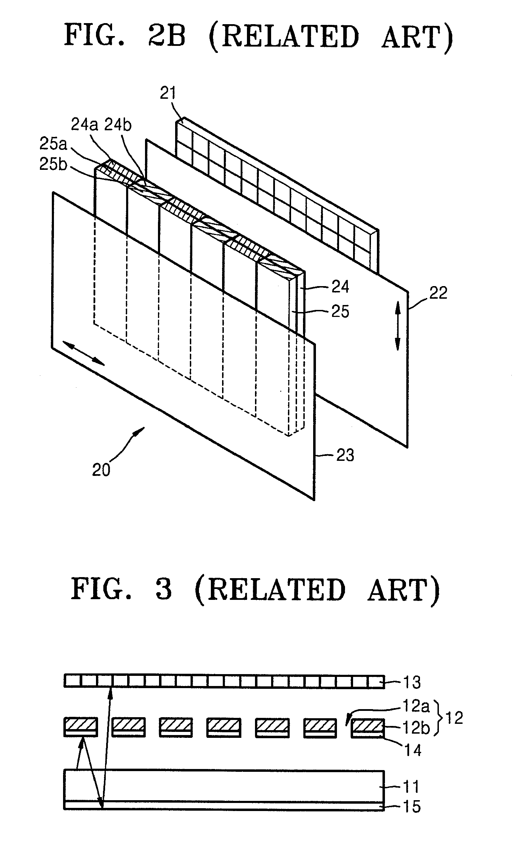

Research has recently been conducted on a stereoscopic image display apparatus capable of switching between a 2D mode and a 3D mode in order to selectively display either a 2D image or a 3D image according to an image signal that is to be displayed. Figures 2A and 2B schematically illustrate exemplary configurations and operations of related art 2D/3D switchable stereoscopic image display apparatuses.

Referring to Figure 2A, the related art 2D/3D switchable stereoscopic image display apparatus 20 includes a display panel 21, a first polarizer 22, first and second birefringent element arrays 24 and 25, and a second polarizer 23. The first birefringent element array 24 includes a plurality of alternating first and second birefringent elements 24a and 24b that delay phases of incident light by +λ/4 and - λ/4, respectively. The second birefringent element array 25 includes a plurality of alternating third and fourth birefringent elements 25a and 25b that delay phases of incident light by +λ/4 and -λ/4, respectively. The first and second polarizers 22 and 23 only transmit light of a specific polarization direction. For example, the first and second polarizers 22 and 23 may transmit light having vertical and horizontal polarization directions, respectively.

In the above-described configuration, if the first and second birefringent elements 24a and 24b in the first birefringent element array 24 are displaced relative to the third and fourth birefringent elements 25a and 25b in the second birefringent element array 25, as illustrated in Figure 2A, a barrier is periodically created. Thus, a left-eye image and a right-eye image which are alternately displayed on each vertical column of pixels are separately provided to the left eye and the right eye.

On the other hand, if the first and second birefringent elements 24a and 24b in the first birefringent element array 24 completely overlap the third and fourth birefringent elements 25a and 25b in the second birefringent element array 25 as illustrated in Figure 2B, a barrier is not created and all of the light transmitted by the first and second birefringent elements 24a and 24b passes through the second polarizer 23, and thus, the display panel 20 displays a 2D image.

Other various types of related art 2D/3D switchable stereoscopic image displays are well known to one skilled in the art.

However, the related art parallax barrier type autostereoscopic display of Figure 1 has a low light use efficiency and low brightness because some of the incident light is blocked by the barrier. Figure 3 illustrates the exemplary configuration of a related art parallax barrier type stereoscopic image display with improved light use efficiency. Referring to Figure 3, in order to prevent a reduction in brightness of the related art parallax barrier type stereoscopic image display, the related art parallax barrier type stereoscopic image display includes reflective films 14 formed respectively corresponding on the barriers 12b facing the backlight unit 11, and a reflective plate 15 disposed on a bottom surface of the backlight unit 11. In this case, light exiting the backlight unit 11 toward the barriers 12b is reflected by the reflective films 14 and the reflective plate 15, and thus, enabling a reutilization of light. However, this configuration makes it impossible to switch between 2D and 3D modes.

The present invention aims to provide a two-dimensional (2D)/ three-dimensional (3D) image switchable stereoscopic display providing increased brightness by improving its light use efficiency.

According to an aspect of the present invention, there is provided a stereoscopic image display apparatus comprising: a backlight unit which has a reflective plate on a bottom surface thereof; a polarizer which only transmits light of a specific polarization direction emitted from the backlight unit; a first birefringent element array comprising a plurality of alternating first and second birefringent elements that change the polarization direction of incident light into different directions; a second birefringent element array comprising a plurality of alternating third and fourth birefringent elements that change the polarization direction of the incident light into different directions; a reflective polarizing sheet which transmits light of a specific polarization direction transmitted by the second birefringent element array while reflecting light of another polarization direction transmitted by the second birefringent element array; and a display panel which displays an image. The first and second birefringent element arrays are able to move with respect to each other.

The reflective polarizing sheet may be a wire-grid polarizer comprising a regular array of parallel metallic wires. The polarizer may be a reflective polarizing film which transmits light of a specific polarization direction emitted by the backlight unit while reflecting light of another polarization direction.

The first and second birefringent elements in the first birefringent element array may have a width equal to that of the third and fourth birefringent elements in the second birefringent element array.

Light transmitted by the first birefringent element may have a polarization direction perpendicular to that of light transmitted by the second birefringent element and light transmitted by the third birefringent element may have a polarization direction perpendicular to that of light transmitted by the fourth birefringent element.

Light consecutively transmitted by the first and third birefringent elements may have a polarization direction perpendicular to a polarization direction of light incident thereon and light consecutively transmitted by the second and fourth birefringent elements may have a polarization direction perpendicular to the polarization direction of the light incident thereon.

Furthermore, light consecutively transmitted by the first and fourth birefringent elements may have a polarization direction parallel to the polarization direction of incident light and light consecutively transmitted by the second and third birefringent elements may have a polarization direction parallel to the polarization direction of the incident light.

The reflective polarizing sheet may transmit a portion of light which has a polarization direction perpendicular to the polarization direction of light transmitted by the polarizer and reflect the remaining portion transmitted by the second birefringent element array.

The first and fourth birefringent elements may transmit light without changing the polarization direction of the light and the second and third birefringent elements are -k/2 retarders and λ/2 retarders, respectively.

Alternatively, the first and third birefringent elements are +λ/4 retarders and the second and fourth birefringent elements are -λ/4 retarders.

Light consecutively transmitted by the first and third birefringent elements may have a polarization direction parallel to a polarization direction of light incident thereon and light consecutively transmitted by the second and fourth birefringent elements may have a polarization direction parallel to the polarization direction of the light incident thereon.

Furthermore, light consecutively transmitted by the first and fourth birefringent elements may have a polarization direction perpendicular to the polarization direction of light incident thereon and light consecutively transmitted by the second and third birefringent elements may have a polarization direction perpendicular to the polarization direction of light incident thereon.

The reflective polarizing sheet may transmit a portion of light having a polarization direction parallel to the polarization direction of light transmitted by the polarizer while reflecting the remaining portion of the light transmitted by the second birefringent element array. The first and third birefringent elements may be λ/2 retarders and -λ/2 retarders, respectively, and the second and fourth birefringent elements may transmit light without changing its polarization direction.

The first birefringent element array may comprise a plurality of horizontally alternating first and second birefringent elements that extend vertically and are arranged in a vertical stripe pattern and the second birefringent element array may comprise a plurality of horizontally alternating third and fourth birefringent elements that extend vertically and are arranged in a vertical stripe pattern.

The first birefringent element array may comprise a plurality of horizontally alternating first and second birefringent elements that extend obliquely and are arranged in an oblique stripe pattern and the second element array may comprise a plurality of horizontally alternating third and fourth birefringent elements that extend obliquely and are arranged in an oblique stripe pattern.

The first birefringent element array may comprise first and second rectangular birefringent elements arranged alternately in a 2D lattice and the second birefringent element array may comprise third and fourth rectangular birefringent elements alternately arranged in a 2D lattice.

The above and other aspects of the present invention will become more apparent by describing in detail exemplary embodiments thereof with reference to the attached drawings in which:
Figure 1 schematically illustrates an exemplary configuration of a related art parallax barrier type autostereoscopic image display;
Figures 2A and 2B schematically illustrate exemplary configurations and operations of related art two-dimensional (2D)/three-dimensional (3D) switchable stereoscopic image displays;
Figure 3 illustrates an exemplary configuration of a related art parallax barrier type autostereoscopic image display with improved light use efficiency;
Figures 4A and 4B schematically illustrate the configurations and operations of a two-dimensional (2D)/three-dimensional (3D) switchable stereoscopic image display that is highly efficient and with improved light use efficiency according to an exemplary embodiment of the present invention;
Figure 5 schematically illustrates a cross-sectional view of a reflective polarizing sheet for a stereoscopic image display according to an exemplary embodiment of the present invention;
Figure 6 illustrates a plan view of a reflective polarizing sheet of the 2D/3D stereoscopic image display apparatus of Figures 4A and 4B, according to an exemplary embodiment of the present invention; and
Figures 7 and 8 schematically illustrate exemplary configurations of first and second birefringent element arrays of the 2D/3D stereoscopic image display apparatus of Figures 4A and 4B, according to exemplary embodiments of the present invention.

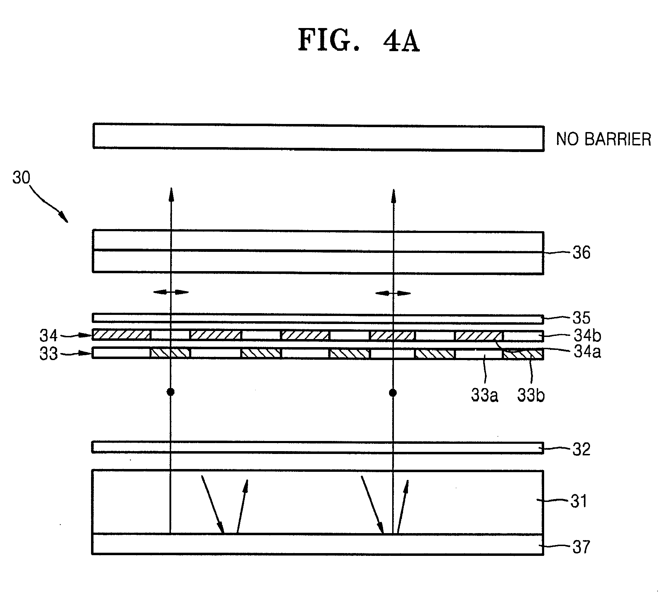

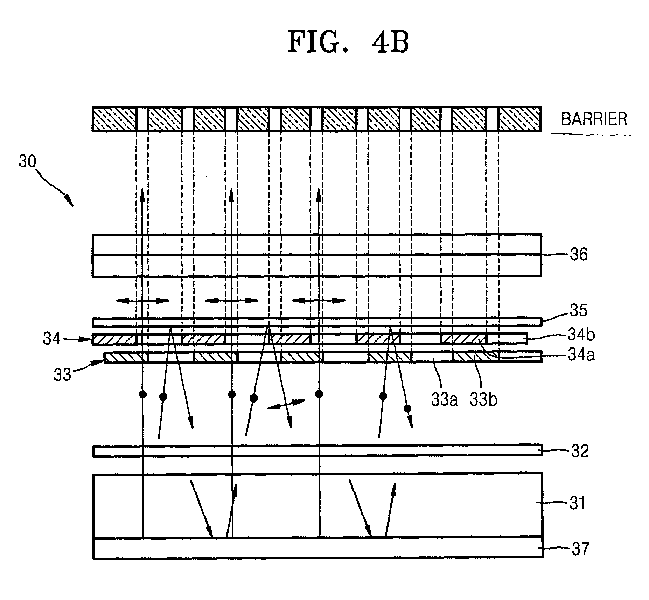

Figures 4A and 4B schematically illustrate configurations and operations of a two-dimensional (2D)/three-dimensional (3D) switchable stereoscopic image display 30 that is highly efficient according to an exemplary embodiment of the present invention.

Referring to Figure 4A, the 2D/3D stereoscopic image display 30 includes a backlight unit 31 that has a reflective plate 37 on a bottom surface thereof, a polarizer 32 which only transmits light of a specific polarization direction emitted from the backlight unit 31, a first birefringent element array 33 including a plurality of alternating first and second birefringent elements 33a and 33b which change the polarization direction of incident light into different directions, a second birefringent element array 34 including a plurality of alternating third and fourth birefringent elements 34a and 34b which change the polarization direction of incident light into different directions, a reflective polarizing sheet 35 which transmits light of a specific polarization direction transmitted by the second birefringent element array 34 while reflecting light of another polarization direction, and a display panel 36 displaying an image.

The polarizer 32 may be an absorptive polarizer which transmits light with a specific polarization direction and absorbs light with another polarization direction. However, in order to improve light use efficiency of the 2D/3D stereoscopic image display apparatus 30, the polarizer 32 is preferably a multi-layer reflective polarizing film such as a dual brightness enhancement film (DBEF) transmitting light of a specific polarization direction while reflecting light of another polarization direction.

According to the present exemplary embodiment, the display panel 36 may be a liquid crystal display (LCD) panel, which is a non-emissive panel that uses the backlight unit 31 as a light source. The display panel 36 may alternately display columns of pixels of right and left eye images in a 3D mode. Furthermore, the display panel 36 may display alternating columns of pixels of multiview images in order to produce a multiview stereoscopic image.

The first and second birefringent element arrays 33 and 34 change the polarization direction of incident light and to achieve this purpose, each of the first and second birefringent element arrays 33 and 34 respectively includes first and second birefringent elements 33a and 33b, and third and fourth birefringent elements 34a, and 34b such as rotators or retarders. For example, the first birefringent element array 33 may include horizontally alternating first and second birefringent elements 33a and 33b that extend vertically and are arranged in a vertical stripe pattern. Although not able to be seen in Figure 4A, the first and second birefringent elements 33a and 33b extend along a longitudinal direction of the 2D/3D stereoscopic image display 30 and are alternately arranged in a horizontal direction of the 2D/3D stereoscopic image display 30. Similarly, the second birefringent element array 34 may also include horizontally alternating third and fourth birefringent elements 34a and 34b that extend vertically and are arranged in a vertical stripe pattern. In this case, the third and fourth birefringent elements 34a and 34b extend along a longitudinal direction of the stereoscopic image display 30 and are alternately arranged in a horizontal direction.

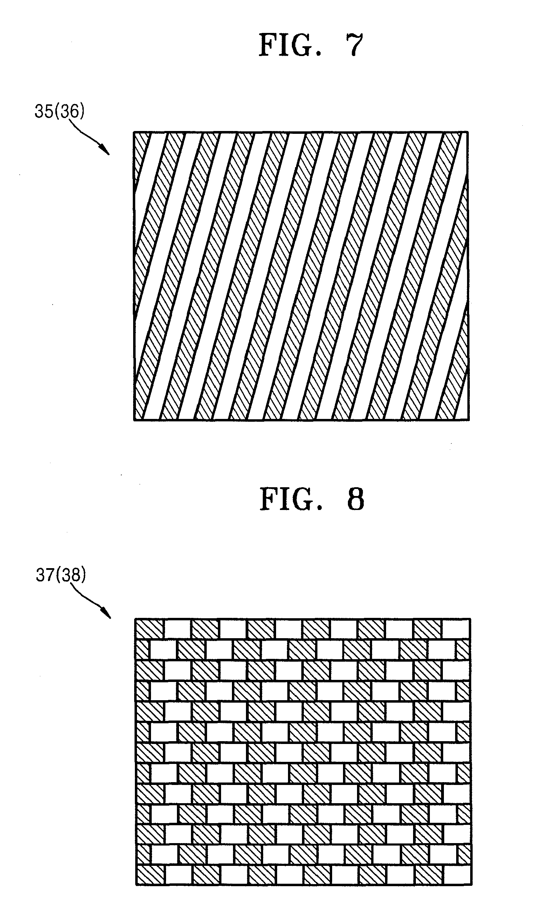

However, the first and second birefringent element arrays 33 and 34 are not limited thereto, and may have other various configurations. Figures 7 and 8 schematically illustrate exemplary configurations of first birefringent element arrays 35 and 37 and second birefringent element arrays 36 and 38 of the 2D/3D stereoscopic image display 30, according to exemplary embodiments of the present invention.

Referring to Figure 7, the first birefringent element array 35 includes a plurality of horizontally alternating first and second birefringent elements that obliquely extend along a longitudinal direction of the 2D/3D stereoscopic image display and are arranged in an oblique stripe pattern. Similarly, the second birefringent element array 36 includes horizontally alternating third and fourth birefringent elements that obliquely extend along a longitudinal direction of the 2D/3D stereoscopic image display and are arranged in an oblique stripe pattern. Referring to Figure 8, first and second birefringent element arrays 37 and 38 may have the shape of a 2D lattice. Hence, the first birefringent element array 37 consists of first and second rectangular birefringent elements alternately arranged in a 2D lattice. The second birefringent element array 38 consists of third and fourth rectangular birefringent elements arranged alternately in a 2D lattice.

In the present exemplary embodiment, a difference between polarization directions obtained by the first and second birefringent elements 33a and 33b is 90 degrees. Hence, a polarization direction of light transmitted by the first birefringent elements 33a is perpendicular to a polarization direction of light transmitted by the second birefringent elements 33b. Similarly, a difference between polarization directions obtained by the third and fourth birefringent elements 34a and 34b is 90 degrees. Hence, a polarization direction of light transmitted by the third birefringent elements 34a is orthogonal to a polarization direction of light transmitted by the second birefringent elements 34b.

If the first through fourth birefringent elements 33a, 33b, 34a, and 34b are retarders, a difference between phase delays of the retarders of the first and second birefringent elements 33a and 33b or the third and fourth birefringent elements 34a and 34b is λ/2. The first birefringent elements 33a may be a λ/2 retarder that delays the phase of incident light by half a wavelength λ and the fourth birefringent elements 34b may be a -λ/2 retarder. In the present exemplary embodiment, the second and third birefringent elements 33b and 34a are replaced by isotropic materials that can transmit light without changing the polarization direction of the light. Alternatively, the first and third birefringent elements 33a and 34a may be +λ/4 retarders and the second and fourth birefringent elements 33b and 34b may be -λ/4 retarders. In another exemplary embodiment of the present invention, the first through fourth birefringent elements 33a, 33b, 34a, and 34b may be rotators that perform the same functions as retarders. Hence, a rotator that rotates the incident light by 90°may be used instead of a λ/2 retarder, and a rotator that rotates the incident light by 45°may be used instead of a λ/4 retarder.

In the present exemplary embodiment, light consecutively transmitted by the first and third birefringent elements 33a and 34a has a polarization direction perpendicular to a polarization direction of incident light. In the same manner, light consecutively transmitted by the second and fourth birefringent elements 33b and 34b has a polarization direction perpendicular to the polarization direction of incident light. Furthermore, light consecutively transmitted by the first and fourth birefringent elements 33a and 34b has a polarization direction parallel to the polarization direction of incident light. Similarly, light consecutively transmitted by the second and third birefringent elements 33b and 34a has a polarization direction parallel to the polarization direction of incident light.

The first and second birefringent elements 33a and 33b in the first birefringent element array 33 may have a width equal to that of the third and fourth birefringent elements 34a and 34b in the second birefringent element array 34. For example, the first through fourth birefringent elements 33a, 33b, 34a, and 34b may have double the width of a pixel in the display panel 36. However, the first through fourth birefringent elements 33a, 33b, 34a, and 34b may be wider than double the width of a pixel of the display panel 36 to produce a multiview stereoscopic image. In order to produce a 4-view stereoscopic image, the first through fourth birefringent elements 33a, 33b, 34a, and 34b may have a width that is four times the width of a pixel of the display panel 36.

The reflective polarizing sheet 35 only transmits light of a specific polarization direction transmitted by the second birefringent element array 34 and reflects light having another polarization direction. In particular, when the display panel 36 is a LCD panel, the reflective polarizing sheet 35 transmits light having a polarization direction parallel to a polarization plane of a rear polarizing plate (not shown) disposed on a rear surface of the LCD panel while reflecting light having a polarization direction perpendicular to the polarization plane of the rear polarizing plate on the rear surface of the LCD panel. However, the rear polarizing plate on the rear surface of the LCD panel may be replaced with the reflective polarizing sheet 35 in order to simplify the structure of the 2D/3D stereoscopic image display 30.

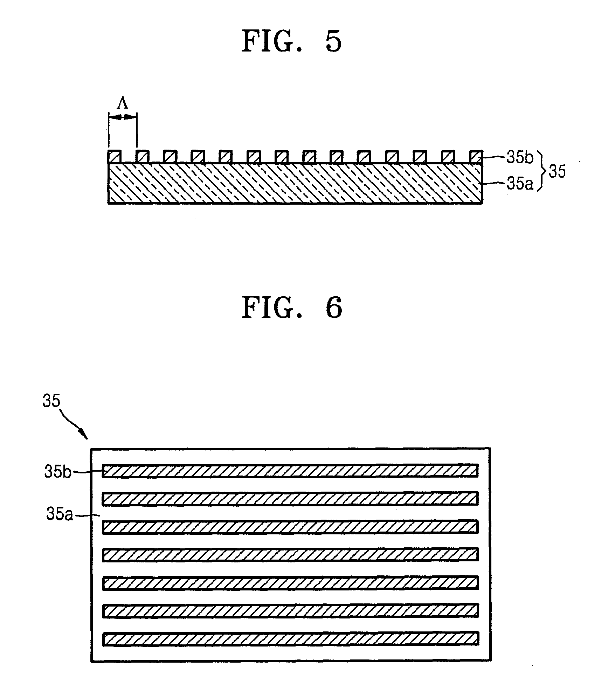

To provide good quality polarized lights to the display panel 36, the reflective polarizing sheet 35 preferably has a very high polarization extinction ratio. To achieve this purpose, the reflective polarizing sheet 35 may be a wire-grid polarizer, as illustrated in Figures 5 and 6, which consists of a regular array of thin parallel conductive metallic wires 35b arranged on a transparent substrate 35a. In the related art, a wire-grid polarizer functions as a diffraction grating if a period Λ between successive thin parallel conductive metallic wires 35b is longer than the wavelength of incident light, and as a polarizer if the period A between successive thin parallel conductive metallic wires 35b is shorter than the wavelength of the incident light. A wire-grid polarizer that functions as the polarizer reflects light of a polarization direction parallel to the thin parallel metallic wires 35a while transmitting light of a polarization direction perpendicular to the thin parallel metallic wires 35a. If the thin parallel metallic wires 35a are arranged in an appropriate way, S-polarized light having a polarization direction perpendicular to an incident plane of the wire-grid polarizer is reflected by the wire-grid polarizer while P-polarized light having a polarization direction parallel to the incident plane is transmitted by the wire-grid polarizer. As the period A between successive thin parallel metallic wires 35b decreases, a polarization extinction ratio of the reflective polarizing sheet 35 exponentially increases.

Thus, according to the present exemplary embodiment, the reflective polarizing sheet 35 is a wire-grid polarizer with the thin parallel metallic wires 35b arranged parallel to one another on the entire area of the transparent substrate 35a as illustrated in Figures 5 and 6. In this case, the reflective polarizing sheet 35 can provide excellent quality polarized light to the display panel 36.

The operation of the 2D/3D switchable stereoscopic image display 30 that is highly efficient having the above-described configuration will now be described in detail with reference to Figures 4A and 4B.

For convenience of explanation, it is assumed herein that the polarizer 32 is a DBEF that transmits P-polarized light (indicated by '●' in Figures 4A and 4B) and reflects S-polarized light (indicated by '↔'). It is also assumed that the first and fourth birefringent elements 33a and 34b transmit incident light without changing its polarization direction and the second and third birefringent elements 33b and 34a are -λ/2 retarders and λ/2 retarders, respectively. Furthermore, the reflective polarizing sheet 35 is a wire-grid polarizer that reflects P-polarized light while transmitting S-polarized light. Hence, the reflective polarizing sheet 35 transmits a portion of light having a polarization direction perpendicular to that of light transmitted by the polarizer 32 while reflecting the remaining portion of the incident light having a polarization direction parallel to that of light transmitted by the polarizer 32.

First, the backlight unit 31 emits unpolarized light. P-polarized light of the light emitted by the backlight unit 31 is transmitted by the polarizer 32 and is incident on the first birefringent element array 33. S-polarized light is sequentially reflected by the polarizer 32 and the reflective plate 37, which is disposed on the bottom surface of the backlight unit 31 for reutilization. Although not shown, the backlight unit 37 conventionally includes a diffusion plate that allows light to be uniformly emitted. The S-polarized light reflected by the reflective plate 37 is then converted back into unpolarized light as it passes through the diffusion plate.

If the first and second birefringent elements 33a and 33b completely overlap the third and fourth birefringent elements 34a and 34b, respectively, a portion of incident light consecutively passes through the first and third birefringent elements 33a and 34a while the remaining portion of the light consecutively passes through the second and fourth birefringent elements 33b and 34b. The portion of light is transmitted by the first birefringent elements 33a without its polarization direction being changed and is converted into S-polarized light as the portion of light passes through the third birefringent elements 34a, which are λ/2 retarders. Similarly, the remaining portion of the light is converted into S-polarized light as it consecutively passes through the second and fourth birefringent elements 33b and 34b because the second birefringent elements 33b are -λ/2 retarders and the fourth birefringent elements 34b transmit light without changing its polarization direction. Thus, all of the incident light is transmitted through the reflective polarizing sheet 35. Because no barrier is created as illustrated in Figure 4A, a viewer can see a 2D image that is displayed on the entire screen of the display panel 36.

Furthermore, according to an exemplary embodiment of the present invention, the first and second birefringent element arrays 33 and 34 can move with respect to each other. Thus, the first birefringent element array 33 can be shifted relative to the second birefringent element array 34 by a predetermined distance as illustrated in Figure 4B so that portions of the first and second birefringent elements 33a and 33b overlap the fourth and third birefringent elements 34b and 34a, respectively. In this case, a portion of the P-polarized light transmitted by the polarizer 32 consecutively passes through the first and third birefringent elements 33a and 34a. Another portion of the P-polarized light consecutively passes through the first and fourth birefringent elements 33a and 34b. Another portion of the light consecutively passes through the second and third birefringent elements 33b and 34a. The remaining portion of the light consecutively passes through the second and fourth birefringent elements 33b and 34b. As described above, portions of the P-polarized light are converted into S-polarized light as they consecutively pass through the first and third birefringent elements 33a and 34a and through the second and fourth birefringent elements 33b and 34b. However, portions of the P-polarized light are not converted into S-polarized light as the portions of the P-polarized light consecutively pass through the first and fourth birefringent elements 33a and 34b and through the second and third birefringent elements 33b and 34a.

Thus, light that has consecutively passed through the first and third birefringent elements 33a and 34a and through the second and fourth birefringent elements 33b and 34b is transmitted through the reflective polarizing sheet 35. On the other hand, light that has consecutively passed through the first and fourth birefringent elements 33a and 34b and through the second and third birefringent elements 33b and 34a is reflected by the reflective polarizing sheet 35. As a result, barriers are created as illustrated in Figure 4B and using the barriers, a left eye image and a right eye image displayed on the display panel 36 can be separately delivered to a left eye and a right eye of a viewer.

Light reflected by the reflective polarizing sheet 35 is transmitted through the polarizer 32 and reflected back by the reflective plate 37 of the backlight unit 31 for reutilization. Furthermore, if a portion of the light reflected by the reflective polarizing sheet 35 consecutively passes through the third and first birefringent elements 34a and 33a, the portion of the light reflected by the reflective polarizing sheet 35 may be converted into S-polarized light as it is incident on the polarizer 32. If the polarizer 32 is a reflective polarizing sheet such as a DBEF, the S-polarized light is reflected by the polarizer 32 for reutilization.

Various changes may be made to the above- described operation and configuration of the 2D/3D stereoscopic image display apparatus 30. The first through fourth birefringent elements 33a, 33b, 34a, and 34b may be configured in a different manner than above, so that light consecutively passing through the first and third birefringent elements 33a and 34a and through the second and fourth birefringent elements 33b and 34b has a polarization direction parallel to the polarization direction of incident light. To this end, the first and third birefringent elements 33a and 34a may be λ/2 retarders and -λ/2 retarders, respectively, and the second and fourth birefringent elements 33b and 34b may be replaced by isotropic materials. In this case, a polarization direction of light consecutively passing through the first and fourth elements 33a and 34b is perpendicular to the polarization direction of incident light. Likewise, a polarization direction of light consecutively passing through the second and third elements 33b and 34a is perpendicular to the polarization direction of incident light. Furthermore, the reflective polarizing sheet 35 transmits light of a polarization direction parallel to the polarization direction of light transmitted through the polarizer 32 while reflecting light of a polarization direction perpendicular to the polarization direction of light transmitted through the polarizer 32. The 2D/3D stereoscopic image display apparatus 30 having this configuration operates in a 2D mode when the first birefringent element array 33 completely overlaps the second birefringent element array 34. The 2D/3D stereoscopic image display apparatus 30 operates in a 3D mode when the first birefringent element array 33 is displaced relative to the second birefringent element array 34.

A 2D/3D switchable stereoscopic image display apparatus according to an exemplary embodiment of the present invention can prevent degradation in brightness while producing a stereoscopic image using a parallax barrier. That is, an exemplary embodiment of the present invention enables a reutilization of light blocked by a barrier using a reflective polarizing sheet, and thus, provides improved light use efficiency and increased brightness as compared to related art stereoscopic displays. An exemplary embodiment of the present invention also allows switching between 2D and 3D modes.

While the present invention has been particularly shown and described with reference to exemplary embodiments thereof, it will be understood by one of ordinary skill in the art that various changes in form and details may be made therein without departing from the scope of the present invention as defined by the following claims.

## Claims

1. A stereoscopic image display apparatus comprising:
a backlight unit (31) which has a reflective plate (37) disposed on a bottom surface thereof;
a polarizer (32) which only transmits light of a specific polarization direction emitted from the backlight unit (31);
a first optical element array (33) comprising alternating first and second optical elements (33a, 33b), and a second optical element array (34) comprising alternating third and fourth optical elements (34a, 34b);
a reflective polarizing sheet (35) arranged to transmit light of a first polarization direction transmitted from the second optical element array (34) and to reflect light of a second polarization direction transmitted from the second optical element array (34); and
a display (36) for displaying an image;
in which the first and second optical element arrays (33, 34) are configurable in combination to change the polarization direction of at least a portion of light transmitted from the polarizer (32).

2. The apparatus of claim 1 wherein at least two of the first, second, third and fourth optical elements are birefringent elements.

3. The apparatus of claim 2, wherein the first and the second birefringent element arrays are able to move with respect to each other.

4. The apparatus of any preceding claim, wherein the reflective polarizing sheet is a wire-grid polarizer comprising a regular array of parallel metallic wires.

5. The apparatus of claim 4, wherein a distance between successive parallel metallic wires of the regular array of parallel metallic wires is shorter than a wavelength of light incident on the reflective polarizing sheet.

6. The apparatus of claim 2, wherein the polarizer comprises a reflective polarizing film which transmits the light of the specific polarization direction emitted by the backlight unit while reflecting light of another polarization direction.

7. The apparatus of claim 2, wherein each of the first and the second birefringent elements in the first birefringent element array have a width equal to that of the third and the fourth birefringent elements in the second birefringent element array.

8. The apparatus of claim 7, wherein light transmitted by the first birefringent elements has a polarization direction perpendicular to that of light transmitted by the second birefringent elements and light transmitted by the third birefringent elements has a polarization direction perpendicular to that of light transmitted by the fourth birefringent elements.

9. The apparatus of claim 8, wherein the first and the third birefringent elements overlap, and light transmitted by the overlapping first and third birefringent elements has a polarization direction perpendicular to a polarization direction of light incident thereon and the second and the fourth birefringent elements overlap, and light transmitted by the overlapping second and fourth birefringent elements has a polarization direction perpendicular to the polarization direction of the light incident thereon.

10. The apparatus of claim 9, wherein the first and the fourth birefringent elements overlap, and light transmitted by the overlapping first and fourth birefringent elements has a polarization direction parallel to the polarization direction of light incident thereon and the second and the third birefringent elements overlap, and light transmitted by the overlapping second and third birefringent elements has a polarization direction parallel to the polarization direction of light incident thereon.

11. The apparatus of claim 10, wherein the reflective polarizing sheet transmits a portion of light having a polarization direction perpendicular to the polarization direction of light transmitted by the polarizer, and reflects the remaining portion of the light transmitted by the second birefringent element array.

12. The apparatus of claim 10, wherein the first and the fourth optical elements transmit light without changing the polarization direction of the light and the second and third birefringent elements are -λ/2 retarders and λ/2 retarders, respectively.

13. The apparatus of claim 10, wherein the first and the third birefringent elements are +λ/4 retarders and the second and the fourth birefringent elements are -λ/4 retarders.

14. The apparatus of claim 8, wherein the first and the third birefringent elements overlap, and light transmitted by the overlapping first and third birefringent elements has a polarization direction parallel to a polarization direction of light incident thereon, and the second and the fourth birefringent elements overlap, and light transmitted by the overlapping second and fourth birefringent elements has a polarization direction parallel to the polarization direction of the light incident thereon.

15. The apparatus of claim 14, wherein the first and the fourth birefringent elements overlap, and light transmitted by the overlapping first and fourth birefringent elements has a polarization direction perpendicular to the polarization direction of light incident thereon and the second and the third birefringent elements overlap, and light transmitted by the overlapping second and third birefringent elements has a polarization direction perpendicular to the polarization direction of light incident thereon.

16. The apparatus of claim 15, wherein the reflective polarizing sheet transmits a portion of light having a polarization direction parallel to the polarization direction of light transmitted by the polarizer, and reflects the remaining portion of the light transmitted by the second birefringent element array.

17. The apparatus of claim 15, wherein the first and the third birefringent elements are λ/2 retarders and - λ/2 retarders, respectively, and the second and the fourth optical elements transmit light without changing its polarization direction.

18. The apparatus of claim 7, wherein the first and the second birefringent elements are horizontally alternating, extend vertically and are arranged in a first vertical stripe pattern and the third and the fourth birefringent elements are horizontally alternating, extend vertically and are arranged in a second vertical stripe pattern.

19. The apparatus of claim 7, wherein the first and the second birefringent elements are horizontally alternating, extend obliquely and are arranged in a first oblique stripe pattern and the third and the fourth birefringent elements are horizontally alternating, extend obliquely and are arranged in a second oblique stripe pattern.

20. The apparatus of claim 7, wherein the first and the second rectangular birefringent elements are arranged alternately in a first two-dimensional (2D) lattice and the third and the fourth rectangular birefringent elements are alternately arranged in a second 2D lattice.

21. The apparatus of claim 6, wherein the light reflected by the polarizer is reflected back to the reflective plate of the backlight, which converts the reflected light to unpolarized light.

22. The apparatus of claim 6 or claim 21, wherein the light reflected by the reflective polarizing sheet is reflected back to the reflective plate of the backlight.
